# EUROPEAN PATENT SPECIFICATION

(11) **EP 1 776 611 B1**
(45) Date of publication and mention of the grant of the patent: **28.11.2007**
(21) Application number: 05769234.5
(22) Date of filing: 02.08.2005
(51) Int. Cl.: G02C 5/00, G02C 1/02

(54) **IMPROVED EYEGLASSES**
VERBESSERTE BRILLEN
LUNETTES AMELIOREES

(30) Priority: 12.08.2004 IT BS20040091
(43) Date of publication of application: 25.04.2007
(73) Proprietor: Steva S.r.l., 25121 Brescia (IT)
(72) Inventor: KASTNER, Stefan c/o Steva S.r.l., I-25121 Brescia (IT)
(74) Representative: Sangiacomo, Fulvia
(86) International application number: PCT/IT2005/000467
(87) International publication number: WO 2006/016386

(56) References cited:
- WO-A-03/093893
- DE-C- 213 310
- FR-A- 2 841 001
- US-A- 6 164 775

## Description

### Field of the Invention

This invention concerns the eyeglasses field and it refers in particular to the so-called rimless, or Glasant eyeglasses, both for reading and for long distance.

### Prior Art

Eyeglasses can be with or without frames, that is rimless. Usually, eyeglasses with a frame can be made following the operating and assembly techniques such as:
- chamfering the edge of each lens, positioning of the lens in the profile of a frame and blocking by tightening the frame around the lens by means of a screw or using pressure to force the lens to fit into the frame when the latter is made of celluloid or some other plastic material.
- milling of a groove in the flat edge of each lens and the fixing of the lens between a part of the frame and a nylon thread part and parcel of the frame itself.

Eyeglasses without frames are usually made by flat chamfering each lens, drilling each lens at the edges adjacent to the temple and nose areas, followed by insertion and blocking of screws, pins or similar in the drillings of the lenses to connect the latter to the central bridge over the nose and lateral bars.
In this embodiment, however, the screws, pins or similar, besides forming a weak point of the structure of eyeglasses, they are always on the inside of the lenses, occupying two parts of the temple and nose areas and consequently limiting the useful field of view.

Furthermore, the international patent application document WO 03/093893 A describes rimless eyeglasses wherein the lenses are provided with connecting projections at the respective lateral nose and temple sides and the nose bridge and the lateral end brackets have corresponding housings receiving said projections.

### Object and Summary of the Invention

Starting from these premises, one object of this invention is to avoid in fact, the above mentioned drawbacks regarding in particular rimless glasses.

Another object of the invention is however to provide eyeglasses that do not require any drilling of the lenses and that, even though they are rimless, do not suffer from any encroachment or limitation of the field of view, thus guaranteeing maximum comfort and safety of the user.

Still another object of the invention is to provide rimless eyeglasses simple to produce, with a solid structure and competitively priced even for eyeglasses of the same type, as well as being rapid and immediate to assemble, also directly by the optician, once the ophthalmic lenses, even different, have been chosen, according to the faults of the vision of the user and requirements of the latter as regards to material, shape and colour of the other elements completing the eyeglasses.

A further object of the invention is to provide ophthalmic lenses prepared for a simple and direct coupling, in a reversible form, with complementary elements to make up the rimless eyeglasses, without the need either for specific machining or additional special instruments.

These objectives and implicit advantages are achieved, according to the invention, with an improved eyeglass as defined in claim 1. Each lens is equipped with connecting pins, projecting from the nose and temple areas and in that the nose bridge and front bracket of each bar of the eyeglasses in order to be connected to the lenses have a unidirectional housing to receive said pins.

The connecting pins can be made as an integral part of the relative lens or can be associated and fixed to the border of the lens to become integral with it.

### Brief Description of the invention

The invention will however be illustrated and become more evident in the continuation of this description made in reference to the enclosed indicative and not limiting drawings, in which:

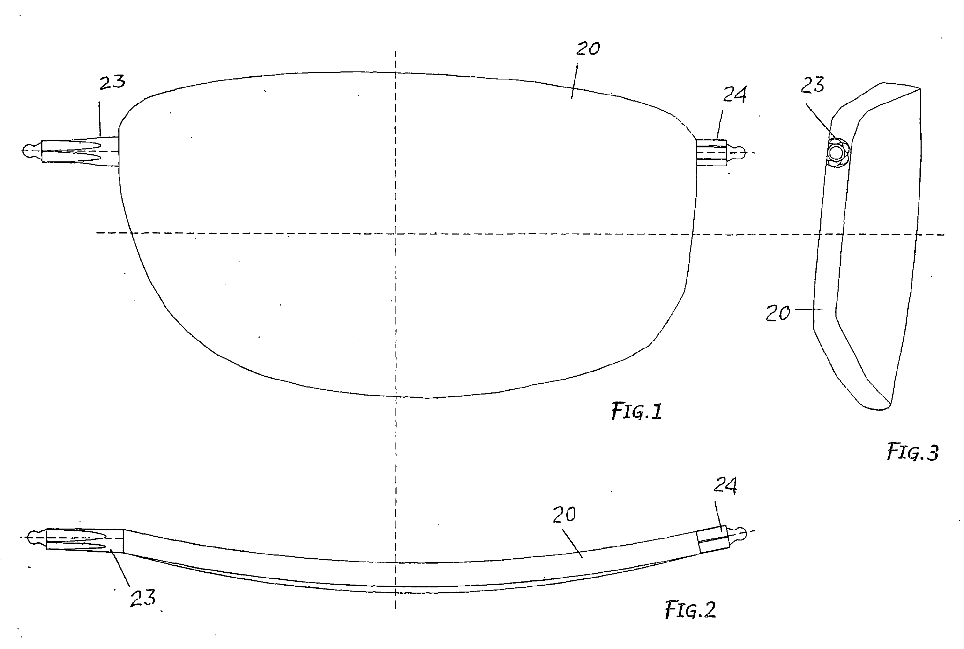

Figs. 1, 2 and 3 are enlarged views from different angles of a lens for eyeglasses according to the invention;

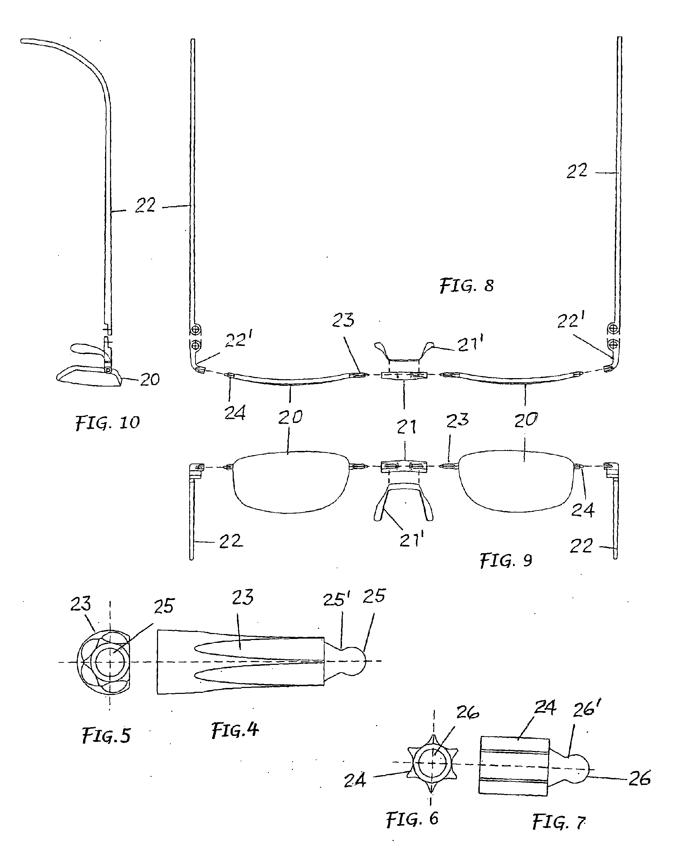

Figs. 4 and 5 are enlarged front and end views of the connecting pin at the nose side of a lens;
Figs. 6 and 7 are enlarged front and end views of the connecting pin at the temple side of a lens;
Figs. 8, 9 and 10 show an exploded view of the components of eyeglasses viewed from a different direction;

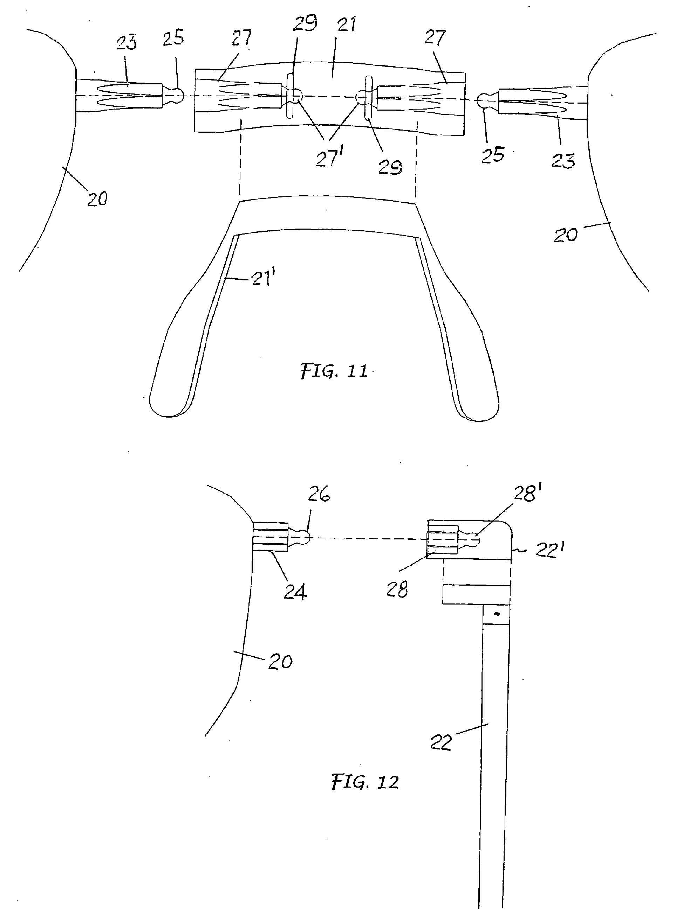

Fig. 11 is an enlarged view of a detail of Fig. 8 in correspondence with the bridge of the eyeglasses;
Fig. 12 is an enlarged view of a detail of Fig. 8 in correspondence with the temple area of the eyeglasses;

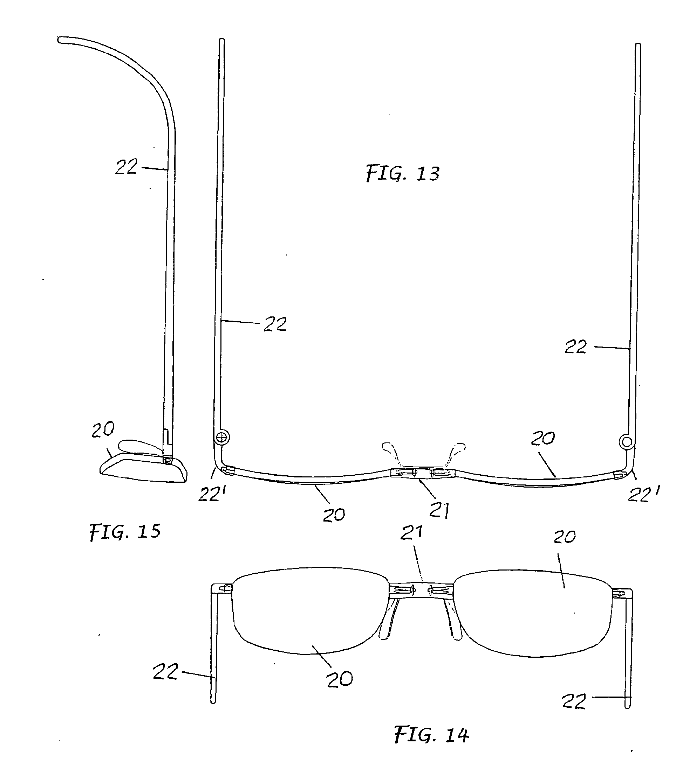

Figs. 13, 14 and 15 are views in different directions of the assembled eyeglasses; and

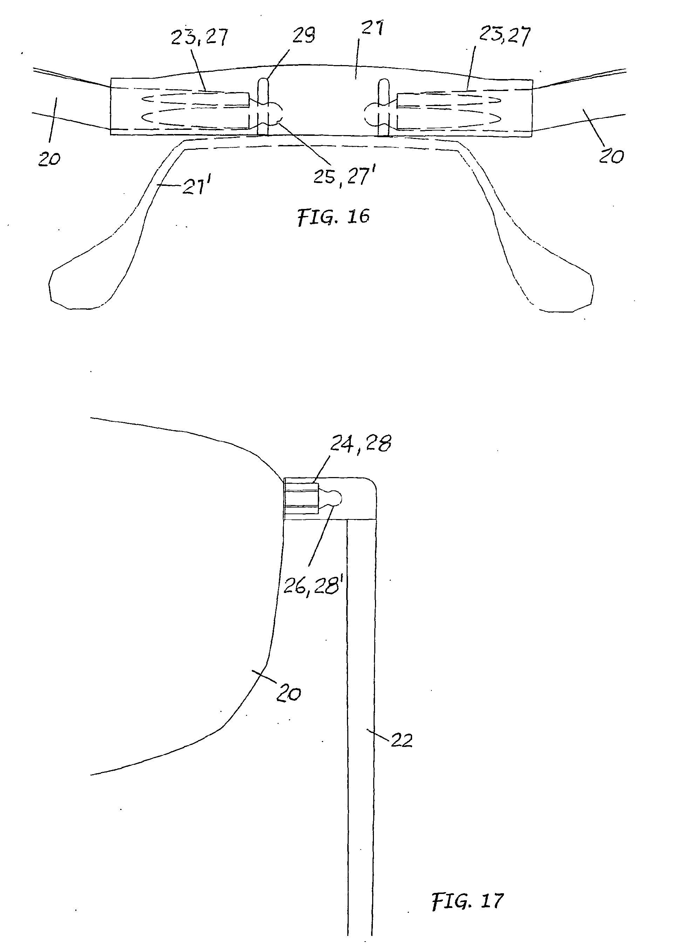

Figs. 16 and 17 are two enlarged detailed views in correspondence, respectively, of the nose bridge and the temple bracket of the assembled eyeglasses.

### Detailed Description of the Invention

As shown, the eyeglasses comprise two lenses 20, which can have the same or different dioptres and that are however prepared to be connected directly to a nose bridge 21 and with the end brackets 22' of two temple bars 22.

Each lens 20 is in fact equipped with two connecting pins 23, 24, one on the nose side, the other on the temple side and both projecting radially from the peripheral edge of the lens. Said connecting pins 23, 24 can be produced as an integral part of the relative lens 20 or can be prepared as separate elements and then fixed stably to the edge of the lens by polymerising or some other process depending on the materials being used.

Geometrically, both the connecting pins 23, 24 can have a polygonal, star shaped or some other shape cross section, and at least one flat section or longitudinal reference groove so as they may be connected, in a unidirectional way and without them having the possibility of turning, with the parts, nose bridge and end bracket of the bars. Furthermore, each of the pins 23, 24 can terminate with a blocking head 25, 26, respectively, that can be ball shaped or conical and however such to form with the rest of the pin a tapered neck 25', 26', respectively.

The nose bridge 21 is provided at each of its ends with a housing 27 which is shaped and has a cross-section corresponding to that of the connecting pin 23 on the nose side of each lens and which has, on its bottom, a seat 27' matching that of the head of said pin. In the same way, the end bracket 22' of each bar 22 is provided at its end to be connected to the lens, with a housing 28 shaped and with a cross-section analogous to that of the connecting pin 24 on the temple side of each lens, it also having a shape 28' at the bottom similar to that of the temple pin. In this way, the connecting pins 23, 24 of the lenses 20 preferably require to be force fitted into housings 27, 28 of the nose bridge 20 and bars 22 of the eyeglasses.

Practically, the components 20, 21, 22 can be connected rapidly and easily by completely inserting the connecting pins 23, 24 of the lenses into the respective housings 27, 28 provided in the nose bridge 21 and in the end brackets 22' of the bars 22. In this way the head of each pin, being force fitted, comes into contact with the bottom of respective housing, ensuring fitting in the longitudinal direction of the lenses both to the nose bridge and the end brackets of the bars. At the same time, thanks to the section of pins 23, 24 the lenses are unable to turn compared with the bridge and end brackets of the bars, ensuring the correct configuration of the eyeglasses.

An appropriate choice of the shapes and sizes of the pins and housings into which they have to be inserted, the connecting of the lenses to the nose bridge and end brackets of the bars of the eyeglasses can be either irreversible or reversible, depending on the needs and type of eyeglasses.

According to the invention, in order to facilitate fitting and to make it reversible, in each housing 27, 28, a lock ring 29 can be inserted crossways, through a cut or slot made in the bridge and each end bracket of the bars, which the blocking head of the respective pin 23, 24 will pass through, and axially block the latter. The ring can be held radially in the respective cut by any means to make sure it engages with the head of the respective pin. For example, with regards to the nose bridge, each blocking ring 29 may be held in its respective slot by the nose pieces 21' applied to the bridge itself, and on removing the nose pieces it will be possible to release the blocking ring and allow the pin to slide out.

## Claims

1. Rimless eyeglasses comprising two lenses, a nose bridge and two bars, each hinged to a respective end bracket, in which each lens (20) is provided with connecting pins (23, 24), projecting from the nose and temple sides, and the nose bridge and each end bracket of the bars of the eyeglasses, in order to connect to the lenses, have unidirectional housings (27, 28) receiving said pins, **characterized in that** each connecting pin (23, 24) is coupled to a respective housing (27, 28) with the interposition of a stop ring (29), placed and fixed in a crossways direction within said housing to axially hold the pin in said housing.

2. Eyeglasses according to claim 1, wherein each connecting pin (23, 24) has a polygonal or star cross section, at least a flat area or a lateral reference groove for unidirectional fitting to the housing (27, 28) in which it is inserted, and a end lock head (25, 26) forming at the base a tapered neck (25', 26'), and wherein the nose bridge and each end bracket of the bars have housings (27, 28) the shape and cross-section of which is congruous with said connecting pins to be force fitted and without the possibility of turning, the head of said pins ensuring longitudinal connection of the lenses with the bridge and bars.

3. Eyeglasses according to claim 1, wherein the stop ring (29) engages the end lock head (25,26) of the pin on a level with its tapered neck.

4. Eyeglasses according to claim 1, wherein said connecting pins (23, 24) are an integral part of the relative lens and protrude from opposite sides without encroaching on the surface of the lens.

5. Eyeglasses according to claim 1, wherein said connecting pins (23, 24) are elements inserted and fixed to the edge of each lens without encroaching on the surface of the lens.

6. Eyeglasses according to claim 2, wherein the connecting pins are fitted permanently into the housings of the nose bridge and end bracket of each bar.

7. Eyeglasses according to claim 2, wherein the connecting pins are fitted reversibly into the housings of the nose bridge and end bracket of each bar.

## Patentansprüche

1. Randlose Brille mit zwei Gläsern, einem Nasensteg und zwei Bügeln, die jeweils per Scharnier mit der jeweiligen Backe verbunden sind, jedes Brillenglas (20) ist mit Verbindungsstiften ausgestattet (23, 24), die seitlich an Nase und Schläfen vorkragen, und Der Nasensteg und beide Brillenbügelbacken haben als Verbindungsstück zu den Gläsern eine Nut zur Aufnahme (27, 28) der erwähnten geradlinig verlaufenden Stifte, **dadurch gekennzeichnet dass** die Verbindungsstifte (23, 24) mit der jeweiligen Nut durch einen zwischengelagerten (27, 28) Feststellring (29) verbunden sind, der quer zur genannten Nut verläuft und den Stift dort mittig festhält.

2. Brille nach Anspruch 1, bei dem jeder Verbindungsstift (23, 24) einen polygonalen oder sternförmigen Abschnitt hat oder zumindest einen seitlichen Absatz oder eine Rille zur Aufnahme der geradlinig verlaufenden Verbindung mit der Nut (27, 28), in die er eingefügt wird, sowie ein Arretierkopf (25, 26), der an seiner Basis ein verjüngtes Halsstück ausbildet (25', 26'), und in dem der Nasensteg und beide Brillenbügelbacken eine Nut (27, 28) haben, die in Form und Größe den genannten Verbindungsstiften entsprechen, um in Form einer Steckverbindung eine Verbindung mit den nicht drehbaren Stiften zu ermöglichen, wobei der Kopf der Stifte die Längsverbindung der Gläser mit dem Steg und den Bügeln gewährleistet.

3. Brille nach Anspruch 1, bei welcher der Feststellring (29) auf Höhe des verjüngten Halses am Stift in den Arretierkopf (25, 26) greift.

4. Brille nach Anspruch 1, bei dem die Verbindungsstifte (23, 24) mit den Gläsern eine Einheit bilden und die an den jeweils gegenüberliegenden Seiten vorstehen ohne in die Oberfläche der Gläser einzudringen.

5. Brille nach Anspruch 1, bei dem die Verbindungsstifte (23, 24) integrierte Bestandteile bilden, die am Rand der Brillengläser befestigt sind, ohne in die Oberfläche der Gläser einzudringen.

6. Brille nach Anspruch 2, bei dem die Verbindungsstifte über eine Steckverbindung mit den Nuten des Nasenstegs und den Backen der Bügel unlöslich verbunden sind.

7. Brille nach Anspruch 2, bei dem die Verbindungsstifte über eine Steckverbindung mit den Nuten des Nasenstegs und den Backenbügeln reversibel verbunden sind.

## Revendications

1. Lunette sans monture comprenant deux verres, un pont nasal et deux branches, chacune reliée par charnière à un respectif tenon, où chaque verre (20) est doté de pivots de fixation (23, 24), dépassants du côté nasal et du côté temporal, et le pont nasal et les tenons de branches de la lunette, pour leur fixation sur les verres, ont chacun un logement (27, 28) de réception unidirectionnel des dits pivots, **caractérisé en ce que** chaque pivot de fixation (23, 24) est accouplé à un respectif logement (27, 28) avec l'interposition d'un anneau de blocage (29), disposé et arrêté en direction transversale par rapport au logement et servant à retenir axialement le pivot dans ledit logement.

2. Lunette selon la revendication 1, dans la quelle chaque pivot de fixation (23, 24) a une section polygonale ou à étoile, au moins un plan ou rainure latérale de référence pour l'accouplement unidirectionnel avec le logement (27, 28) dans lequel il est inséré, et une tête terminale de blocage (25, 26) qui défini en sa base un col fuselé (25', 26'), et dans lequel le pont nasal et chaque tenon de branche a des logements (27, 28) de forme et de section complémentaires à celle des dits pivots de fixation pour un accouplement avec ceux-ci, à encastrement et sans possibilité de rotation, la tête des pivots assurant la jonction longitudinale des verres avec le pont et les branches.

3. Lunette selon la revendication 1, sur laquelle l'anneau de blocage (29) engage la tête terminale de blocage (25, 26) dans le pivot au niveau de son col fuselé.

4. Lunette selon la revendication 1, dans laquelle les pivots de fixation (23, 24) constituent une partie intégrante de chaque verre et dépassent des côtés opposés sans envahir la superficie du verre.

5. Lunette selon la revendication 1, dans laquelle les pivots de fixation (23, 24) sont des éléments rapportés et fixés au bord de chaque verre sans envahir la superficie du verre.

6. Lunette selon la revendication 2, dans laquelle les pivots de fixation sont assemblés par encastrement de manière irréversible avec les logements du pont nasal et du tenon de chaque branche.

7. Lunette selon la revendication 2, sur laquelle les pivots de fixation sont assemblés par encastrement de manière réversible avec les logements du pont nasal et du tenon de chaque branche.
